**Europäisches Patentamt**

**European Patent Office**

**Office européen des brevets**

(19)

(11) Publication number: **0 229 858 B1**

(12)

# EUROPEAN PATENT SPECIFICATION

(45) Date of publication of the patent specification: **31.05.89**

(51) Int. Cl.⁴: **G08B 19/02, B64D 15/20**

(21) Application number: **85810476.3**

(22) Date of filing: **18.10.85**

(54) Process for detecting the likelihood of ice formation, ice warning system for carrying out the process and utilization thereof.

(43) Date of publication of application:
**29.07.87 Bulletin 87/31**

(45) Publication of the grant of the patent:
**31.05.89 Bulletin 89/22**

(84) Designated Contracting States:
**AT BE CH DE FR GB IT LI LU NL SE**

(56) References cited:
**CH-A- 506 850**
**DE-B- 2 750 165**
**US-A- 3 240 054**
**US-A- 3 270 330**
**US-A- 4 327 286**
**US-A- 4 461 178**

(73) Proprietor: **VIBRO-METER SA, Route de Moncor 4, CH-1700 Fribourg(CH)**

(72) Inventor: **Lustenberger, Martin, Rue d'Or 13, CH-1700 Fribourg(CH)**

(74) Representative: **Steiner, Martin et al, c/o AMMANN PATENTANWAELTE AG BERN Schwarztorstrasse 31, CH-3001 Bern(CH)**

## Description

The present invention relates to a process for detecting the likelihood of natural ice formation on the surface of a vehicle, to a warning system for carrying out the process and to a utilization thereof.

The process comprises the steps of: positioning a transducer having a resonant frequency of vibration on the surface of said vehicle which is exposed to natural ice formation and exciting said transducer at one of its frequencies of resonance.

The ice warning system comprises a transducer adapted to be secured to said vehicle, a vibration exciting means, said transducer being responsive to said vibration exciting means for vibrating at one of its frequencies of resonance, said vibration exciting means generating a vibration having a frequency equal to said frequency of resonance of said transducer.

Such an ice detector is known from US-A 3 240 054. The detector comprises a first transducer exposed to natural ice formation and a second transducer protected from the accretion of ice. Ice accretion on the first transducer increases the rigidity or stiffness of the vibrating element and therefore the resonant frequency thereof. However, the detector does not comprise means for alternately cooling and heating the first transducer to temperatures respectively below and above the ambient temperature to artificially create and then melt an accretion of ice on the transducteur when the ambient temperature is near or below the freezing point. Consequently, the detector cannot detect the likelihood of natural ice formation.

An ice detecting apparatus is also known from US-A 3 270 330. The detector comprises a transducer exposed to natural ice formation and means for vibrating said transducer. A channel is formed between a structure to be monitored and the transducer. Any natural ice formation in the channel stops the vibration of the transducer and the transducer is then heated by a resistive element for melting the ice existing in the channel. However, like in the preceding case, the apparatus cannot detect the likelihood of natural formation on the transducer because the latter is not cooled below the ambient temperature for artificially creating an accretion of ice when the ambient temperature is near or below the freezing point.

Consequently, it is an object of the present invention to realize a process and an ice warning device for detecting the likelihood of natural ice formation on the surface of a vehicle, more particularly an aircraft. To solve this problem, the process and the device according to the invention are respectively described in claims 1 and 5.

The diaphragm of the present invention is set into vibration at one of its frequencies of resonance, these frequencies of resonance being dependent on the mass and the stiffness of the diaphragm so that any deposit of ice on the diaphragm will change the frequency of resonance of the latter and the measurement of the variation in the frequency of resonance provide an indication of the amount of the accretion of ice. Moreover, the diaphragm is alternately submitted to variations of temperature which facilitates the detection of any artificially created deposit of ice on the diaphragm when the ambient temperature is near the freezing point and the detection of ice crystals when the ambient temperature is below the freezing point. An alarm indicating that natural ice formation is likely to occur is released when the variation of the frequency of resonance reaches a predetermined value.

The invention has a broad field of applications, more particularly but not exclusively in the aeronautical field, for example for detecting the likelihood of build up ice on or in the engines and the wings of an airplane, which is normally a problem difficult to solve. The invention has also an application in the field of ground vehicles and surfaces which are submitted to natural ice formation. The detection of ice formation is generally effected by an indirect method. That is by measuring the air moisture and the ambient temperature. However, such a method cannot detect and measure the presence and the likelihood of a deposit of ice.

The invention will be described further by way of example and with reference to the accompanying drawings.

Figure 1 illustrates schematically the principle of the invention,

Figure 2 and 3 show respectively a second and a third embodiment of the transducer of Figure 1.

The ice warning system comprises a transducer 1 with a metallic diaphragm 2 on the internal side of which is secured a piezoelectric cell 3. The application of an alternating voltage to the terminals of the piezoelectric cell sets the latter into vibration and this vibration is transmitted to the diaphragm. The diaphragm 2 with the piezoelectric cell 3 is mounted to a metallic plate 4 lying on an insulator ring 6. The internal face of the ring 6 is closed by a ribbed heat sink 7. Peltier elements 8, thermally coupled to the heat sink 7 and to the metallic plate 4, are disposed within the insulator ring 6 between the heat sink 7 and the metallic plate 4. The diaphragm 2 which lies upon the metallic plate 4 is also thermally coupled to this plate 4. The diaphragm 2 together with the piezoelectric cell 3 is the frequency determining element of an oscillator 9 to which it is connected by leads 10. One of these leads is directly connected to the diaphragm 2 and the other lead is connected to the lower internal side of the cell 3. The Peltier elements 8 are connected to a DC current generator 11 the polarity of which is capable to be reversed. Finally, the oscillator 9 and the DC current generator 11 are connected to a microprocessor 12 which measures any variation in the frequency of the oscillator 9 and controls the period, the magnitude and the direction of current flow of the current generator 11. A temperature sensing probe 13 for measuring the ambient temperature Tu (illustrated schematically) is connected to the microprocessor 12. Another temperature probe 14 for measuring the temperature of the diaphragm 2 is also connected to the microprocessor 12. The latter delivers to its output an alarm signal whenever ice accretion on the diaphragm is present or likely to occur. The ice warning system operates as follows.

The resonance frequency of the diaphragm 2 together with the piezoelectric cell 3 is given by the relationship:

$$\omega = \sqrt{\frac{f}{m}} \, ,$$

$\omega$ = pulsation = $2\Pi$.frequency
f = elastic constant
m = mass

With regard to the preceding formula there are two different cases: a) the case in which the diaphragm is set into vibration at its fundamental frequency of resonance and b) the case in which the diaphragm is set into vibration at a higher harmonic such that the surface of the vibrating diaphragm comprises a certain number of nodes and antinodes. In the first case, if a layer of ice builds up on the diaphragm, the total mass m of the diaphragm and the piezoelectric cell increases due to the accretion of ice, and in accordance with the above formula, the frequency of the oscillator 9 decreases. In the second case, the layer of ice which builds up on the diaphragm 2 increases its stiffness thus increasing the value of f. This effect predominates upon the one corresponding to the increase of the mass m so that the frequency of the oscillator 9 increases. This second case is particularly interesting because it has been ascertained that a deposit of ice only on the diaphragm leads to an increase of the frequency of the oscillator, while a deposit of other elements like water, oil or dirt leads always to a decrease of the frequency due to the increase of the mass m. Thus the invention distinguishes between the build up of ice always (except in case a) indicated by an increase of the frequency of the oscillator 9 and the presence of other elements like water, oil or dirt always indicated by a decrease of the oscillator's frequency. Any variation in the frequency of the oscillator 9 is measured by the microprocessor 12 and, if it reaches and/or exceeds a predetermined value, the circuit 12 delivers at its output an alarm signal signaling the likelihood of natural ice formation on the vehicle when the ambient temperature is near the freezing point or of ice crystals adhering to a warm surface when the ambient temperature is below the freezing point. The resonance frequency of the diaphragm is preferably between 1 and 20 kHz.

The DC current generator 11 is connected to the Peltier elements and generates a current having a period, magnitude and direction of flow determined by the microprocessor 12 as a function of measurements of the ambient temperature by the probe 13 and the temperature of the diaphragm measured by the probe 14. For a given direction of flow of the current of the generator 11, the Peltier elements cool the diaphragm 2 to a few degrees below the ambient temperature Tu and, if this ambient temperature is in the neighbourhood of the freezing point, a layer of ice may build up on the diaphragm which decreases or increases the frequency of the oscillator 9 as described previously. After a period of time, the polarity or the direction of flow of the current of the generator 11 is reversed and the Peltier elements heat the diaphragm 2 to a few degrees above the ambient temperature in order to cause the ice previously formed to melt. The alternation of the cooling and heating phases may be periodic, the duration of these phases being in the order of a few tens of seconds. This provides for a periodical repetition of the measurement of the frequency of the oscillator. The transducer 1 is of relatively small dimensions so that its thermal inertia is small and the phases of cooling and heating of the diaphragm practically intantaneously follow the inversions of the direction of current flow from the DC generator 11. The preceding shows that the device according to the invention gives a direct indication of the presence of a layer of artificially created ice on the diaphragm so that it can deliver an alarm before the occurence of a natural deposit of ice.

In practice, and more particularly in the aeronautical field, it may occur at very low temperatures of e.g. -20°C or -40°C, if the air craft is flying through a cloud of ice or supercooled water droplets, that ice builds up not on the coolest parts of the aircraft like the wings but in the vicinity of the warmer engines parts. In this case, an ice warning system according to the invention which is mounted in this area may become covered by a layer of ice not during the cooling phase of the diaphragm by the Peltier elements but instead during the heating phase. However, in all cases, the frequency of the oscillator 9 decreases if the diaphragm is excited into vibration at its fundamental frequency of resonance and the frequency of the oscillator 9 increases if the diaphragm is excited into vibration at a higher harmonics.

As mentioned in the introduction, the ice warning system according to the invention is more particularly although not exclusively, utilized in the aeronautical field. In this case, a certain number of ice warning systems like the one described above are arranged on the engines or in the vicinity thereof and on the wings of the aircraft. It is possible to associate one microprocessor to each transducer or, on the contrary, to provide one single central microprocessor for all transducers. If an alarm is released, the power of the engines may be increased in order to prevent any building up of natural ice on the engines and the de-icing system in the wings and the engines may be switched on to the same purpose. It is clear that if the ambient temperature rises above a determined value for which no risk of natural ice formation exists, the system is preferably switched off automatically by the microprocessor.

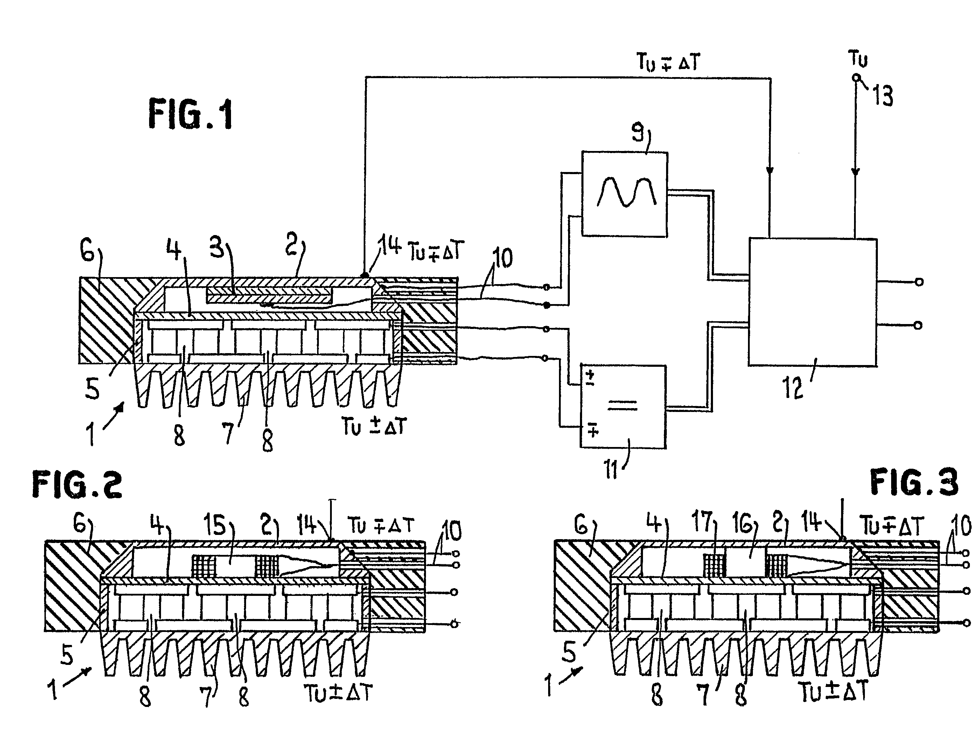

In Figure 1, the diaphragm is excited into vibration by a piezoelectric cell 3. Figure 2 shows that the diaphragm may also be excited into vibration electrodynamically by an inductive device 15 secured to the plate 4, connected to the oscillator 9 and having a gap with respect to the diaphragm 2 which must be of a magnetic material. Figure 3 shows a further embodiment of the device which sets the diaphragm into vibration. In this case, a magnetostrictive element 16 is secured to the diaphragm 2, this element being set into vibration by a coil 17 connected to the oscillator 9. The mechanical vibrations produced in the magnetostrictive element 16 are transmitted to the diaphragm 2 with the same frequency.

It would also be possible to heat the diaphragm by a current of relatively strong intensity or by a hot gas delivered by a system of pipes to the transducers. A similar system of pipes in which cooling gas or liquids are flowing could be used for cooling the diaphragm.

## Claims

1. A process for detecting the likelihood of natural ice formation on the surface of a vehicle, more particularly an aircraft, comprising the steps of: positioning a transducer (1) having a resonant frequency of vibration on a surface of the vehicle which is exposed to natural ice formation, exciting said transducer (1) at one of its frequencies of resonance, characterized in that said transducer (1) comprises a diaphragm (2) exposed to natural ice formation and by the further steps of: alternately cooling and heating said diaphragm (2) to temperatures respectively below and above the ambient temperature in accordance with a predetermined repetitive cycle to artificially create and then melt an accretion of ice when the ambient temperature is near or below the freezing point, measuring any variation in the resonant frequency of vibration of the diaphragm (2) during said step of alternately and repetitiously cooling and heating the diaphragm, and signaling an alarm wherever said variation reaches and/or exceeds a predetermined value.

2. A process according to claim 1 further comprising the steps of: measuring the ambient temperature, measuring the diaphragm temperature, controlling said step of alternately cooling and heating in accordance with a cycle the duration of which being dependent on the measured ambient and diaphragm temperature.

3. A process according to claim 1 or 2, wherein the step of exciting the diaphragm (2) at its resonant frequency of vibration produces a decrease in the resonant frequency in the presence of an accretion of ice.

4. A process according to claim 1 or 2, further comprising the step of exciting the diaphragm (2) into vibration at a harmonic of its resonant frequency of vibration, wherein the presence of an accretion of ice causes an increase of the resonant frequency when the diaphragm is excited into vibration at said harmonic.

5. An ice warning device for carrying out the process of claim 1, comprising a transducer (1) adapted to be secured to said vehicle, a vibration exciting means (3), said transducer being responsive to said vibration exciting means (3) for vibrating at one of its frequencies of resonance, said vibration exciting means generating a vibration having a frequency equal to said frequency of resonance of said transducer (1), characterized in that said transducer (1) comprises a diaphragm (2) exposed to natural ice formation, means (13) for measuring the ambient temperature in the vicinity of said vehicle, means (8) thermally coupled to said diaphragm for alternately cooling and heating said diaphragm (2) respectively below and above said ambient temperature, said alternate cooling and heating occurring in a predetermined, repetitious cycle which is operable, under conditions where natural ice formation is likely to occur, to artificially create and then melt an accretion of ice on said diaphragm during said cycle, frequency measuring means (12) coupled to said vibration exciting means for measuring any variation in the resonant frequency of said diaphragm, and means (12) responsive to said frequency measuring means for signaling an alarm if the variation in the resonant frequency of the diaphragm reaches and/or exceeds a predetermined value.

6. A device according to claim 5, wherein said diaphragm (2) has an upper, exposed side and a lower, protected side and wherein said vibration exciting means include a piezoelectric cell (3) or a magnetostriction transducer (15) or an electrodynamic transducer (16) secured to the lower, protected side of the diaphragm (2) and connected to said vibration exciting means (3), said diaphragm and said cell or said transducers being a frequency determining element of said vibration exciting means.

7. The ice warning system according to claim 5 or 6, wherein said means for cooling and heating comprises Peltier elements (8), and further comprising a DC current generator (11) operably connected to said Peltier elements for controlling the direction of current flow to said Peltier elements, said direction of current flow being alternately reversed for effecting said cooling and heating.

8. The ice warning system according to claim 7, further comprising a first probe (13) for measuring the ambient temperature, a second probe (14) for measuring the temperature of said diaphragm (2), a microprocessor (12) responsive to said first and second probes for controlling the duration, magnitude and direction of flow of current of said DC current generator (11).

9. The ice warning system according to claim 8, wherein the reversal of direction of current flow is periodic, said microprocessor (12) determining said cycle of cooling and heating in dependence on said ambient temperature and said diaphragm temperature.

10. Ice warning system according to claim 8, further comprising an oscillator (9), the frequency of which is determined by the resonant frequency of the transducer (1), for energizing said vibration exciting means (3), and wherein said frequency measuring means includes said microprocessor (12).

11. The ice warning system according to claim 8, wherein said microprocessor (12) is further operable to energize a de-icing system whenever the variation in the resonant frequency reaches and/or exceeds said predetermined value.

12. The ice warning system according to claim 5, wherein said diaphragm (2) is responsive to said accretion of ice to decrease its resonant frequency when excited into vibration at its fundamental frequency of resonance.

13. The ice warning system according to claim 5, wherein said diaphragm is responsive to said accretion of ice to increase its resonant frequency when excited into vibration at a higher harmonics of its fundamental frequency of resonance.

14. Utilization of a plurality of ice warning systems according to claim 5 for detecting the likelihood of natural ice accretion on airplanes.

15. Utilization of a plurality of ice warning systems according to claim 5 for detecting the likelihood of natural ice accretion on ground vehicles and surfaces.

**Patentansprüche**

1. Verfahren zur Feststellung der Gefahr natürlicher Eisbildung auf der Oberfläche eines Fahrzeugs, insbesondere eines Flugzeugs, bestehend aus folgenden Schritten: Anbringen eines Wandlers (1) mit einer Resonanz-Schwingungsfrequenz an einer Oberfläche des Fahrzeugs, die natürlicher Eisbildung ausgesetzt ist, Anregung des genannten Wandlers mit einer seiner Resonanzfrequenzen, dadurch gekennzeichnet, dass der Wandler (1) eine Membran (2) aufweist, die natürlicher Eisbildung ausgesetzt ist, und durch folgende weitere Schritte: abwechselndes Abkühlen und Aufheizen der genannten Membran auf Temperaturen unterhalb bzw. über der Umgebungstemperatur gemäss einem bestimmten, sich wiederholenden Zyklus, um künstlich ein Ansetzen von Eis zu bewirken und dieses anschliessend wieder zu schmelzen, wenn die Umgebungstemperatur in der Nähe oder unter dem Gefrierpunkt liegt, Messen der Aenderungen der Resonanz-Schwingungsfrequenz der Membrane (2) während des erwähnten wiederholten Abkühl- und Aufheizschrittes der Membrane, und Abgabe eines Alarms, wenn die genannte Aenderung einen bestimmten Wert erreicht und/oder überschreitet.

2. Verfahren nach Anspruch 1 mit den folgenden zusätzlichen Schritten: Messen der Umgebungstemperatur, Messen der Membrantemperatur, Steuerung des erwähnten abwechselnden Abkühl- und Aufheizschrittes gemäss eines Zyklus, dessen Dauer von der gemessenen Umgebungs- und Membrantemperatur abhängig ist.

3. Verfahren nach Anspruch 1 oder 2, bei welchem der Schritt der Anregung der Membran (2) mit ihrer Resonanz-Schwingungsfrequenz bei Anwesenheit einer Eisschicht eine Verminderung der Resonanzfrequenz bewirkt.

4. Verfahren nach Anspruch 1 oder 2 mit dem zusätzlichen Schritt, dass die Membran (2) zur Schwingung mit einer Harmonischen der Resonanz-Schwingungsfrequenz angeregt wird, wobei die Anwesenheit einer Eisschicht eine Erhöhung der Resonanzfrequenz bewirkt, wenn die Membran zur Schwingung mit dieser Harmonischen angeregt wird.

5. Eiswarnvorrichtung zur Durchführung des Verfahrens nach Anspruch 1, bestehend aus einem zur Befestigung am erwähnten Fahrzeug geeigneten Wandler (1), einem Mittel zur Anregung der Schwingung (3), wobei der genannte Wandler auf das genannte Mittel zur Anregung der Schwingung (3) anspricht und mit einer seiner Resonanzfrequenzen schwingt, und (wobei) das erwähnte Mittel zur Anregung der Schwingung eine Schwingung erzeugt, deren Frequenz gleich der genannten Resonanzfrequenz des Wandlers (1) ist, dadurch gekennzeichnet, dass der genannte Wandler (1) eine Membran (2) aufweist, welche natürlicher Eisbildung ausgesetzt ist, Mittel (13) zur Messung der Umgebungstemperatur in der Nähe des erwähnten Fahrzeugs, thermisch mit der genannten Membran gekoppelte Mittel (8) zum abwechselnden Abkühlen und Aufheizen der genannten Membran (2) unter bzw. über die genannte Umgebungstemperatur, wobei dieses abwechselnde Abkühlen und Aufheizen in einem bestimmten, sich wiederholenden Zyklus stattfindet, der unter solchen Bedingungen, wo eine natürliche Eisbildung wahrscheinlich ist derart betrieben werden kann, dass auf der genannten Membran während dieses Zyklus eine Eisschicht künstlich erzeugt und dann geschmolzen wird, (ferner) Mittel (12) zur Messung der Frequenz, die mit den genannten Mitteln zur Anregung der Schwingung gekoppelt sind, um Aenderungen der Resonanzfrequenz der genannten Membran festzustellen, und Mittel (12), die auf diese Mittel zur Messung der Frequenz ansprechen, um einen Alarm abzugeben, wenn die Aenderung der Resonanzfrequenz der Membran einen bestimmten Wert erreicht und/oder überschreitet.

6. Vorrichtung nach Anspruch 5, bei welcher die genannte Membran (2) eine obere, ungeschützte, und eine untere, geschützte Seite aufweist und worin die erwähnten Mittel zur Anregung der Schwingung ein piezoelektrisches Element (3), oder einen magnetostriktiven (15) oder einen elektrodynamischen Wandler (16) beinhalten, welche an der unteren, geschützten Seite der Membran (2) angebracht und an das genannte Mittel (3) zur Anregung der Schwingung angeschlossen sind, wobei diese Membran und diese Zelle oder die genannten Wandler ein frequenzbestimmendes Element des Mittels zur Anregung der Schwingung darstellen.

7. Eiswarnsystem nach Anspruch 5 oder 6, worin das genannte Mittel zum Abkühlen und Aufheizen Peltier-Elemente (8) und weiterhin eine Gleichstromquelle (11) aufweist, welche mit den erwähnten Peltier-Elementen operativ verbunden ist, um die Richtung des Stromflusses zu den Peltier-Elementen zu steuern, wobei diese Stromrichtung abwechselnd umgekehrt wird, um das Abkühlen und Aufheizen zu bewirken.

8. Eiswarnsystem nach Anspruch 7, welches weiterhin eine erste Sonde (13) zu Messung der Umgebungstemperatur, eine zweite Sonde (14) zur Messung der Temperatur der genannten Membran (2) und einen Mikroprozessor (12) aufweist, der auf die erste und zweite Sonde anspricht, um die Dauer, Stärke und Richtung des Stromflusses von der erwähnten Gleichstromquelle (11) zu steuern.

9. Eiswarnsystem nach Anspruch 8, worin die Umkehrung der Richtung des Stromflusses periodisch ist und wobei der erwähnte Mikroprozessor (12) den Abkühl- und Aufheizzyklus abhängig von der Umgebungs- und der Membrantemperatur bestimmt.

10. Eiswarnsystem nach Anspruch 8, welches weiterhin einen Oszillator (9) aufweist, dessen Frequenz durch die Resonanzfrequenz des Wandlers (1) festgelegt ist, um das genannte Mittel zur Schwingungserzeugung (3) zu erregen, wobei das erwähnte Mittel zur Frequenzmessung den erwähnten Mikroprozessor (12) beinhaltet.

11. Eiswarnsystem nach Anspruch 8, worin der erwähnte Mikroprozessor (12) weiterhin wirksam werden kann, um ein Enteisungssystem zu speisen, wenn die Aenderung der Resonanzfrequenz den erwähnten bestimmten Wert erreicht und/oder überschreitet.

12. Eiswarnsystem nach Anspruch 5, worin die erwähnte Membran (2) auf die Eisschicht anspricht, indem sich ihre Resonanzfrequenz vermindert, wenn sie mit ihrer Grundresonanzfrequenz zur Schwingung angeregt wird.

13. Eiswarnsystem nach Anspruch 5, worin die erwähnte Membran (2) auf die Eisschicht anspricht, indem sich ihre Resonanzfrequenz erhöht, wenn sie mit einer höheren harmonischen Schwingung der Grundfrequenz zur Schwingung angeregt wird.

14. Verwendung einer Mehrzahl von Eiswarnsystemen gemäss Anspruch 5, zur Feststellung der Wahrscheinlichkeit natürlicher Eisbildung an Flugzeugen.

15. Verwendung einer Mehrzahl von Eiswarnsystemen nach Anspruch 5, zur Feststellung der Wahrscheinlichkeit natürlicher Eisbildung an Bodenfahrzeugen und Oberflächen.

**Revendications**

1. Procédé pour détecter un risque de formation naturelle de glace sur la surface d'un véhicule, plus particulièrement un véhicule aérien, comprenant les étapes de: positionner un transducteur (1) ayant une fréquence de résonance de vibration sur une surface du véhicule qui est exposée à la formation naturelle de glace, exciter ledit transducteur (1) à l'une de ses fréquences de résonance, caractérisé en ce que ledit transducteur (1) comprend un diaphragme (2) exposé à la formation naturelle de glace et par les étapes additionnelles suivantes: refroidir et réchauffer alternativement ledit diaphragme (2) à des températures respectivement inférieures et supérieures à la température ambiante selon un cycle prédéterminé pour créer artificiellement et ensuite faire fondre un dépôt de glace lorsque la température ambiante est voisine ou inférieure au point de congélation, mesurer toute variation de la fréquence de résonance de vibration du diaphragme (2) pendant ladite étape de refroidissement et de réchauffement alternatif et répété et signaler une alarme si ladite variation atteint et/ou dépasse une valeur prédéterminée.

2. Procédé selon la revendication 1, comprenant en outre les étapes de: mesurer la température ambiante, mesurer la température du diaphragme, contrôler ladite étape de refroidissement et de réchauffement alternatif selon un cycle dont la durée dépend de la température ambiante mesurée et de la température du diaphragme.

3. Procédé selon la revendication 1 ou 2, caractérisé en ce que l'étape d'excitation du diaphragme (2) à sa fréquence de résonance de vibration produit une diminution de la fréquence de résonance en présence d'un dépôt de glace.

4. Procédé selon la revendication 1 ou 2, comprenant en outre l'étape d'exciter le diaphragme (27) en vibration à une harmonique de sa fréquence de résonance, la présence d'un dépôt de glace produisant une augmentation de la fréquence de résonance lorsque le diaphragme est excité en vibration à ladite harmonique.

5. Dispositif avertisseur de gel pour la mise en œuvre du procédé selon la revendication 1, comprenant un transducteur (1) prévu pour être fixé audit véhicule, des moyens d'excitation de vibration (3), ledit transducteur répondant auxdits moyens d'excitation de vibration (3) pour le mettre en vibration à l'une de ses fréquences de résonance, lesdits moyens d'excitation de vibration produisant une vibration ayant une fréquence égale à ladite fréquence de résonance dudit transducteur (1), caractérisé en ce que ledit transducteur comprend un diaphragme (2) exposé à la formation naturelle de glace, des moyens (13) pour mesurer la température ambiante au voisinage dudit véhicule, des moyens (8) couplés thermiquement audit diaphragme pour refroidir et réchauffer alternativement ledit diaphragme (2), respectivement en-dessous et en-dessus de ladite température ambiante, ledit refroidissement et réchauffement alternatif se produisant dans un cycle prédéterminé répétitif susceptible de créer artificiellement et ensuite faire fondre un dépôt de glace sur ledit diaphragme pendant ledit cycle, dans des conditions dans lesquelles une formation naturelle de glace risque de se produire, des moyens de mesure de la fréquence (12) couplés auxdits moyens d'excitation de vibration pour mesurer toute variation de la fréquence de résonance dudit diaphragme et des moyens (12) répondant auxdits moyens de mesure de la fréquence pour signaler une alarme si la variation de la fréquence de résonance du diaphragme atteint et/ou dépasse une valeur prédéterminée.

6. Dispositif selon la revendication 5, caractérisé en ce que ledit diaphragme (2) a un côté supérieur exposé et un côté inférieur protégé et en ce que lesdits moyens d'excitation de vibration comprennent une cellule piézoélectrique (3) ou un transducteur à magnétostriction (15) ou un transducteur électrodynamique (16) fixé au côté inférieur protégé du diaphragme (2) et connecté auxdits moyens d'excitation de vibration (3), ledit diaphragme et ladite cellule ou lesdits transducteurs étant un élément déterminateur de fréquence des moyens d'excitation de vibration.

7. Dispositif avertisseur de gel selon l'une des revendications 5 ou 6, caractérisé en ce que lesdits moyens pour refroidir et réchauffer comprennent des éléments Peltier (8) et comprennent en outre un générateur de courant continu (11) connecté auxdits éléments Peltier pour contrôler la direction d'écoulement du courant dans lesdits éléments Peltier, ladite direction d'écoulement du courant étant alternativement inversée pour produire ledit refroidissement et réchauffement.

8. Dispositif avertisseur de gel selon la revendication 7, comprenant en outre une première sonde (13) pour mesurer la température ambiante, une seconde sonde (14) pour mesurer la température dudit diaphragme (2), un microprocesseur (12) répondant aux première et seconde sondes pour contrôler la durée, l'amplitude et la direction d'écoulement du courant dudit générateur de courant continu (11).

9. Dispositif avertisseur de gel selon la revendication 8, caractérisé en ce que l'inversion de la direction d'écoulement du courant est périodique, ledit microprocesseur (12) déterminant ledit cycle de refroidissement et réchauffement en fonction de ladite température ambiante et de ladite température du diaphragme.

10. Dispositif avertisseur de gel selon la revendication 8, comprenant en outre un oscillateur (9) dont la fréquence est déterminée par la fréquence de résonance du transducteur (1) pour alimenter en énergie lesdits moyens d'excitation de vibration (3), lesdits moyens de mesure de la fréquence comprenant ledit microprocesseur (12).

11. Dispositif avertisseur de gel selon la revendication 8, caractérisé en ce que ledit microprocesseur (12) est en outre capable de commander un système de dégivrage lorsque la variation de la fréquence de résonance atteint et/ou dépasse ladite valeur prédéterminée.

12. Dispositif avertisseur de gel selon la revendication 5, caractérisé en ce que ledit diaphragme (2) réagit audit dépôt de glace par une diminution de sa fréquence de résonance lorsqu'il est excité en vibration à sa fréquence fondamentale de résonance.

13. Dispositif avertisseur de gel selon la revendication 5, caractérisé en ce que ledit diaphragme réagit audit dépôt de glace par une augmentation de sa fréquence de résonance lorsqu'il est excité en vibration à une harmonique de sa fréquence fondamentale de résonance.

14. Utilisation d'une pluralité de dispositifs avertisseurs de gel selon la revendication 5 pour détecter le risque de formation naturelle de glace sur des porteurs aériens.

15. Utilisation d'une pluralité de dispositifs avertisseurs de gel selon la revendication 5 pour détecter le risque de formation naturelle de glace sur des véhicules et des surfaces au sol.

**FIG.1**

$T_U \mp \Delta T$

$T_U$ 13

9

14 $T_U \mp \Delta T$ 10

6 4 3 2

5

1 8 7 8

$T_U \pm \Delta T$

11

12

**FIG.2**

6 4 15 2 14 $T_U \mp \Delta T$ 10

5

1 8 7 8 $T_U \pm \Delta T$

**FIG.3**

6 4 17 16 2 14 $T_U \mp \Delta T$ 10

5

1 8 7 8 $T_U \pm \Delta T$

EP 0 229 858 B1